# EUROPEAN PATENT APPLICATION

(11) **EP 4 138 357 A1**
(43) Date of publication of application: **22.02.2023**
(21) Application number: 21805189.4
(22) Date of filing: 22.04.2021
(51) Int. Cl.: H04L 29/06

(54) **METHOD AND DEVICE FOR NEGOTIATING PERMISSION DURING COMMUNICATION PROCESS, AND ELECTRONIC APPARATUS**

(30) Priority: 15.05.2020 CN 202010415250; 30.06.2020 CN 202010622179
(71) Applicant: Huawei Technologies Co., Ltd., Shenzhen, Guangdong 518129 (CN)
(72) Inventor: XU, Shunhai, Shenzhen, Guangdong 518129 (CN); ZHANG, Liang, Shenzhen, Guangdong 518129 (CN); GUO, Xingmin, Shenzhen, Guangdong 518129 (CN); TANG, Faming, Shenzhen, Guangdong 518129 (CN); WANG, Hao, Shenzhen, Guangdong 518129 (CN)
(74) Representative: Huawei European IPR
(86) International application number: PCT/CN2021/089045
(87) International publication number: WO 2021/227820

(57) **Abstract**

Embodiments of this application provide a permission negotiation method and apparatus during communication, and an electronic device. In the foregoing permission negotiation method during communication, a first electronic device displays an interface of a currently running communication application; and after detecting a first operation of a user, obtains, in response to the first operation, a permission item restricted for use in a process of communication with a second electronic device. Then, the first electronic device sends a first request to the second electronic device, where the first request includes the permission item restricted for use; receives confirmation information of the second electronic device for the permission item restricted for use; and restricts, based on the confirmation information, a locally installed application on applying for the permission item restricted for use. Finally, after communication with the second electronic device ends, the first electronic device restores settings of the permission item of the locally installed application to settings that precede the communication with the second electronic device. In this way, before or during a call, two communication parties can negotiate the permission item restricted for use during communication.

## Description

This application claims priority to Chinese Patent Application No. 202010415250.7, filed with the China National Intellectual Property Administration on May 15, 2020 and entitled "PERMISSION NEGOTIATION METHOD AND APPARATUS DURING COMMUNICATION, AND ELECTRONIC DEVICE", which is incorporated herein by reference in its entirety.

### TECHNICAL FIELD

Embodiments of this application relate to the field of intelligent terminal technologies, and in particular, to a permission negotiation method and apparatus during communication, and an electronic device.

### BACKGROUND

With development of mobile communication technologies, there are an increasing quantity of scenarios of multi-terminal (at least two terminals) interaction. During multi-terminal interaction, a case of audio recording, screen recording, and/or video recording is very common, and a case of hidden recording is also very common. This may infringe user privacy. Currently, user privacy protection attracts increasing attention. When judicial evidence collection is involved, evidence obtained by inducing hidden recording shall not be accepted, and recorded evidence is valid only when the recording is clearly notified to a user. Current distributed permission management does not resolve this problem. Currently, during multi-terminal interaction, when one terminal performs audio recording, video recording, and/or screen recording, other terminals do not know the audio recording, video recording, and/or screen recording, and cannot take further permission control measures.

### SUMMARY

Embodiments of this application provide a permission negotiation method and apparatus during communication, and an electronic device. Embodiments of this application further provide a computer-readable storage medium, so that before or during a call, two communication parties negotiate permission restricted for use in a current communication process.

According to a first aspect, an embodiment of this application provides a permission negotiation method during communication, applied to an electronic device. The method includes: A first electronic device displays an interface of a currently running communication application; and after detecting a first operation of a user, obtains, in response to the first operation, a permission item restricted for use during communication between the first electronic device and a second electronic device. Specifically, the first operation may include a trigger operation performed by the user on a "security mode" icon on a display interface of the currently running communication application. The user may tap, double-tap, or touch and hold the "security mode" icon, or the user may perform another type of triggering operation on the "security mode" icon, to enable a secure communication mode. A type of the triggering operation performed by the user on the "security mode" icon is not limited in this embodiment. Alternatively, the first operation may be an operation in another form. For example, on the display interface of the currently running communication application, the user touches and holds a user identifier (for example, a user name) of the second electronic device, and selects a secure communication mode from a pop-up menu. Alternatively, on the display interface of the currently running communication application, it is detected that duration for which the user presses a mechanical button (for example, an on/off button and/or a volume button) reaches preset duration, where the preset duration may be set by the user during specific implementation. A specific operation form of the first operation is not limited in this embodiment.

Then, the first electronic device sends a first request to the second electronic device, where the first request includes the permission item restricted for use. The first electronic device receives confirmation information of the second electronic device for the permission item restricted for use, and restricts, based on the confirmation information, a locally installed application on applying for the permission item restricted for use.

Finally, after communication between the first electronic device and the second electronic device ends, the first electronic device restores settings of the permission item of the locally installed application to settings that precede the communication between the first electronic device and the second electronic device. Specifically, if two communication parties hang up a call, or the communication cannot continue due to another reason, a current permission agreement is no longer valid. After obtaining disabling information of the currently running communication application and/or notification information of a communication protocol stack, a permission applying arbitration module in the electronic device used by the two communication parties may restore the settings of the permission item of the locally installed application to the settings that precede the communication between the first electronic device and the second electronic device.

In the foregoing permission negotiation method during communication, the first electronic device displays the interface of the currently running communication application; and after detecting the first operation of the user, obtains, in response to the first operation, the permission item restricted for use in the process communication between the first electronic device and the second electronic device. Then, the first electronic device sends the first request to the second electronic device, where the first request includes the permission item restricted for use; receives the confirmation information of the second electronic device for the permission item restricted for use; and restricts, based on the confirmation information, the locally installed application on applying for the permission item restricted for use. Finally, after the communication between the first electronic device and the second electronic device ends, the first electronic device restores the settings of the permission item of the locally installed application to the settings that precede the communication between the first electronic device and the second electronic device. Therefore, before or during a call, the two communication parties can negotiate the permission item restricted for use during communication. In addition, after the communication ends, the settings of the permission item may be restored to permission settings that precede the communication. This does not affect normal use of the electronic device and does not require hardware investment.

In a possible implementation, that the first electronic device restricts, based on the confirmation information, the locally installed application on applying for the permission item restricted for use may be: The first electronic device obtains, based on the confirmation information, a permission item confirmed by the second electronic device in the permission items restricted for use, and then restricts the locally installed application on applying for the permission item confirmed by the second electronic device.

In a possible implementation, after receiving confirmation information of the second electronic device for the permission item restricted for use, the first electronic device may further establish a call connection to the second electronic device. The call connection includes a video call connection or a voice call connection.

In other words, before establishing the call connection to the second electronic device, the user may send the first request to the second electronic device. After receiving the confirmation information of the second electronic device for the permission item restricted for use, the first electronic device establishes the call connection to the second electronic device.

In a possible implementation, after displaying an interface of a currently running communication application, and before detecting a first operation of a user, the first electronic device may further send a call request to the second electronic device, and establish a call connection to the second electronic device based on the call request. The call connection includes a video call connection or a voice call connection. In other words, the first electronic device may first establish the call connection to the second electronic device, and then send the first request to the second electronic device.

In a possible implementation, after establishing the call connection to the second electronic device, if the permission item confirmed by the second electronic device includes all of permission items in the permission items restricted for use, the first electronic device displays prompt information indicating that the call connection is a secure call connection; or if the permission item confirmed by the second electronic device is empty, or the permission item confirmed by the second electronic device includes some of permission items in the permission items restricted for use, the first electronic device displays prompt information indicating that the call connection is a non-secure call connection.

Specifically, the first electronic device may prompt, in a form of a text on the display interface of the currently running communication application, that the call connection is a secure call connection or a non-secure call connection, or may display an icon on the display interface of the currently running communication application, to prompt, with different colors of the icon, that the call connection is a secure call connection or a non-secure call connection. A manner in which the electronic device displays the prompt information is not limited in this embodiment.

In a possible implementation, that the first electronic device sends a first request to the second electronic device, where the first request includes the permission item restricted for use may be: The first electronic device sends a data packet that carries the first request to the second electronic device, where the data packet includes an identifier of the permission item restricted for use. The identifier of the permission item restricted for use may be a name of the permission item restricted for use, or the identifier of the permission item restricted for use may be another type of information, provided that the permission item restricted for use can be indicated. The identifier of the permission item restricted for use is not limited in this embodiment.

In a possible implementation, the data packet includes one or a combination of the following fields: a data packet header field, a type field, a subtype field, and an information embedding field. When a value of the type field is a first preset value, and a value of the subtype field is a second preset value, the data packet is a data packet that carries the first request, and data carried in the information embedding field is the first request. The first preset value and the second preset value may be set during specific implementation. The first preset value and the second preset value are not limited in this embodiment.

In a possible implementation, that the first electronic device sends the data packet that carries the first request to the second electronic device may be: The first electronic device adds a random number to the data carried in the information embedding field, and encrypts, by using a key in a trusted execution environment (TEE), data obtained after the random number is added. The data carried in the information embedding field includes the identifier of the permission item restricted for use.

Specifically, the first electronic device may encrypt, by using a private key in the key of the TEE, the data obtained after the random number is added. The random number is added, to prevent the data carried in the information embedding field from being illegally filled after being reserved. The random number is different during each communication, to ensure uniqueness.

Then, the electronic device encapsulates the encrypted data in the data packet, and sends the data packet to the second electronic device.

In a possible implementation, the first electronic device obtains the permission item restricted for use during communication between the first electronic device and the second electronic device may be: The first electronic device obtains, based on a security protection level set by the user, a permission item restricted for use that corresponds to the security protection level; or obtains a permission item restricted for use that is set by the user.

According to a second aspect, an embodiment of this application provides a permission negotiation apparatus during communication. The apparatus is included in an electronic device, and the apparatus has a function of implementing behavior of the electronic device in the first aspect and the possible implementations of the first aspect. The function may be implemented by hardware, or may be implemented by executing corresponding software by hardware. The hardware or the software includes one or more modules or units corresponding to the foregoing function, for example, a receiving module or unit, a processing module or unit, and a sending module or unit.

According to a third aspect, an embodiment of this application provides a first electronic device, including one or more processors, a memory, a plurality of application programs, and one or more computer programs. The one or more computer programs are stored in the memory. The one or more computer programs include instructions. When the instructions are executed by the first electronic device, the first electronic device is enabled to perform the following steps: displaying an interface of a currently running communication application; after detecting a first operation of a user, obtaining, in response to the first operation, a permission item restricted for use in a process communication between the first electronic device and a second electronic device; sending a first request to the second electronic device, where the first request includes the permission item restricted for use; receiving confirmation information of the second electronic device for the permission item restricted for use; restricting, based on the confirmation information, a locally installed application on applying for the permission item restricted for use; after communication between the first electronic device and the second electronic device ends, restoring settings of the permission item of the locally installed application to settings that precede the communication between the first electronic device and the second electronic device.

In a possible implementation, when the instructions are executed by the first electronic device, the first electronic device is enabled to perform the step of restricting, based on the confirmation information, the locally installed application on applying for the permission item restricted for use, and the step of restricting, based on the confirmation information, the locally installed application on applying for the permission item restricted for use includes: obtaining, based on the confirmation information, a permission item confirmed by the second electronic device in the permission items restricted for use; and restricting the locally installed application on applying for the permission item confirmed by the second electronic device.

In a possible implementation, when the instructions are executed by the first electronic device, after performing the step of receiving the confirmation information of the second electronic device for the permission item restricted for use, the first electronic device is enabled to further perform the following step: establishing a call connection to the second electronic device, where the call connection includes a video call connection or a voice call connection.

In a possible implementation, when the instructions are executed by the first electronic device, after performing the step of displaying the interface of the currently running communication application, and before performing the step of detecting the first operation of the user, the first electronic device is enabled to further perform the following steps: sending a call request to a second electronic device; and establishing a call connection to the second electronic device based on the call request, where the call connection includes a video call connection or a voice call connection.

In a possible implementation, when the instructions are executed by the first electronic device, after performing the step of establishing the call connection to the second electronic device, the first electronic device is enabled to further perform the following step: if the permission item confirmed by the second electronic device includes all of permission items in the permission items restricted for use, displaying prompt information indicating that the call connection is a secure call connection; or if the permission item confirmed by the second electronic device is empty, or the permission item confirmed by the second electronic device includes some of permission items in the permission items restricted for use, displaying prompt information indicating that the call connection is a non-secure call connection.

In a possible implementation, when the instructions are executed by the first electronic device, the first electronic device is enabled to perform the step of sending the first request to the second electronic device, where the first request includes the permission item restricted for use, and the step of sending the first request to the second electronic device may be: sending a data packet that carries the first request to the second electronic device, where the data packet includes an identifier of the permission item restricted for use.

In a possible implementation, the data packet includes one or a combination of the following fields: a data packet header field, a type field, a subtype field, and an information embedding field. When a value of the type field is a first preset value, and a value of the subtype field is a second preset value, the data packet is a data packet that carries the first request, and data carried in the information embedding field is the first request.

In a possible implementation, when the instructions are executed by the first electronic device, the first electronic device is enabled to perform the step of sending the data packet that carries the first request to the second electronic device, and the step of sending the data packet that carries the first request to the second electronic device may be: adding a random number to the data carried in the information embedding field, and encrypting, by using a key in a trusted execution environment, data obtained after the random number is added; encapsulating the encrypted data in the data packet; and sending the data packet to the second electronic device.

In a possible implementation, when the instructions are executed by the first electronic device, the first electronic device is enabled to perform the step of obtaining the permission item restricted for use during communication between the first electronic device and the second electronic device, and the step of obtaining the permission item restricted for use during communication between the first electronic device and the second electronic device may be: obtaining, based on a security protection level set by the user, a permission item restricted for use that corresponds to the security protection level; or obtaining a permission item restricted for use that is set by the user.

According to a fourth aspect, an embodiment of this application provides a computer-readable storage medium. The computer-readable storage medium stores a computer program, and when the computer program is run on a computer, the computer is enabled to perform the method according to the first aspect.

It should be understood that technical solutions in the second to the fourth aspects of embodiments of this application are consistent with the technical solution in the first aspect of embodiments of this application, and beneficial effects achieved by the aspects and corresponding feasible implementations are similar. Details are not described again.

According to a fifth aspect, an embodiment of this application provides a computer program. When the computer program is executed by a computer, the computer program is used to perform the method according to the first aspect.

In a possible design, all or some of the programs in the fifth aspect may be stored in a storage medium encapsulated with the processor, or some or all of the programs may be stored in a memory that is not encapsulated with the processor.

### BRIEF DESCRIPTION OF DRAWINGS

FIG. 1 is a schematic diagram depicting that an application obtains permission in the conventional technology;
FIG. 2 is a schematic diagram of a structure of a first electronic device according to an embodiment of this application;
FIG. 3 is a schematic diagram of a software structure of a first electronic device 100 according to an embodiment of this application;
FIG. 4 is a flowchart of a permission negotiation method during communication according to an embodiment of this application;
FIG. 5 is a schematic diagram of a display interface of a currently running communication application according to an embodiment of this application;
FIG. 6 is a schematic diagram of obtaining a permission item restricted for use according to an embodiment of this application;
FIG. 7 is a flowchart of a permission negotiation method during communication according to another embodiment of this application;
FIG. 8 is a flowchart of a permission negotiation method during communication according to still another embodiment of this application;
FIG. 9 is a flowchart of a permission negotiation method during communication according to yet another embodiment of this application;
FIG. 10 is a schematic diagram of implementation at a communication level according to an embodiment of this application;
FIG. 11 is a schematic diagram of a format of a data packet according to an embodiment of this application;
FIG. 12 is a flowchart of a permission negotiation method during communication according to still yet another embodiment of this application;
FIG. 13 is a flowchart of a permission negotiation method during communication according to a further embodiment of this application;
FIG. 14 is a schematic diagram of an interface for setting a security protection level according to an embodiment of this application;
FIG. 15 is a schematic diagram of an interface for setting a permission item restricted for use according to an embodiment of this application;
FIG. 16 is a flowchart of a permission negotiation method during communication according to a still further embodiment of this application; and
FIG. 17 is a schematic diagram of a structure of a first electronic device according to another embodiment of this application.

### DESCRIPTION OF EMBODIMENTS

Terms used in embodiments of this application are only used to explain specific embodiments of this application, but are not intended to limit this application.

With the development of mobile communication technologies, there are an increasing quantity of scenarios of multi-terminal (at least two terminals) interaction. In the conventional technology, during multi-terminal interaction, when one terminal performs audio recording, video recording, and/or screen recording, other terminals do not know the audio recording, video recording, and/or screen recording, and cannot take further permission control measures.

Based on the foregoing problem, embodiments of this application provide a permission negotiation method during communication, so that before a call or during a call, two communication parties can negotiate a permission item restricted for use in a current communication process.

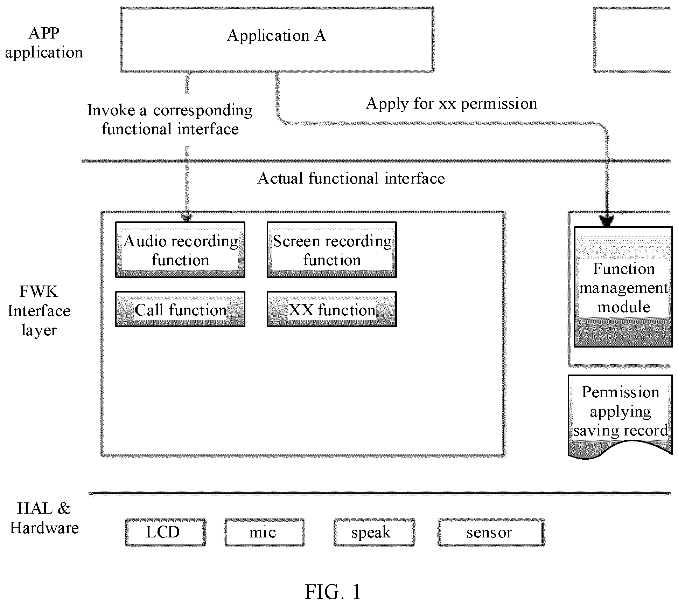

For ease of understanding, the following first describes a manner in which an application obtains permission in the conventional technology. FIG. 1 is a schematic diagram depicting that an application obtains permission in the conventional technology.

In FIG. 1, to operate a physical component in an electronic device, an application A needs to first invoke a standard interface to obtain operation permission of a corresponding component, and only after obtaining corresponding permission, the application A can invoke a corresponding component operation interface. This design is intended to prevent an application from illegally operating the physical component. In an Android (Android) system, permission corresponding to a component is represented by a fixed identifier (identifier, ID), and complete permission of Android is defined in framework-res.apk. Table 1 shows ID information of permission corresponding to some components in the Android system.

**Table 1**

| Permission name | ID information of permission that needs to be applied for |
|---|---|
| Read an input state | android.permission.READ_INPUT_STATE: Read an input state of a current button. This permission is used only for a system |
| Read system logs | android.permission.READ_LOGS: Read system bottom-layer logs |
| Read a phone state | android.permission.READ _PHONE_STATE: Access a phone state |
| Read content of SMS messages | android.permission.READ _SMS: Read content of SMS messages |
| Read synchronization settings | android.permission.READ_SYNC_SETTINGS: Read synchronization settings, and read Google online synchronization settings |
| Read a synchronization status | android.permission.READ_SYNC_STATS: Read a synchronization status, and obtain a Google online synchronization status |
| Reboot a device | android.permission.REBOOT: Allow a program to reboot a device |
| Run automatically upon boot | android.permission.RECEIVE_BOOT_COMPLETED: Allow a program to run automatically upon boot |
| Receive MMS messages | android.permission.RECEIVE_MMS: Receive MMS messages |
| Receive SMS messages | android.permission.RECEIVE_SMS: Receive SMS messages |
| Receive WAP PUSH Messages | android.permission.RECEIVE_WAP_PUSH: Receive WAP PUSH messages |
| Record audio | android.permission.RECORD_AUDIO: Record audio through a microphone of a mobile phone or headset |
| Order system tasks | android.permissi on.REORDER_TASKS: Reorder running tasks in a system Z axis |
| End system tasks | android.permission.RESTART_PACKAGES: End tasks by using a restartPackage(String) method, and the method will be abandoned in the future |
| Send SMS Messages | android.permission.SEND _SMS: Send SMS Messages |
| Set an Activity watcher | android.permission.SET_ACTIVITY_WATCHER: Set an Activity watcher, which is usually used for a monkey test |
| Set an alarm | com.android.alarm.permission.SET_ALARM: Set an alarm |
| Set to always exit | android.permission. SET_ALWAYS_FINISH: Set whether to always exit a program in the background |
| Set animation scale | android.permission. SET_ANIMATION_SCALE: Set global animation scale |
| Set a debug program | android.permission. SET_DEBUG_APP: Set a debug program, which is usually used for development |
| Set a screen orientation | android.permission.SET_ORIENTATION: Set a screen orientation to display in a landscape or standard mode, which is not used for common applications |

For example, an example in which the application A applies for audio recording permission may be as follows:

```
 //Apply for the audio recording permission//
 private static final int GET_RECODE_AUDIO=1;
 private static String[] PERMISSION_AUDIO={
 Manifest.permission.RECORD_AUDIO
 };
 public static void verifyAudioPermissions(Activity activity) {
 int permission=ActivityCompat.checkSelfPermission(activity,
 Manifest.permission.RECORD_AUDIO);
 if (permission !=PackageManager.PERMISSION_GRANTED) {
 ActivityCompat.requestPermissions(activity, PERMISSION_AUDIO,
 GET_RECODE_AUDIO);
 }
 }
```

After the application A successfully applies for the audio recording permission, the application A may operate a microphone (mic) in the electronic device to complete a subsequent audio recording action.

When the two communication parties negotiate the permission item restricted for use in the current communication process, security needs to be ensured. The following describes a trusted execution environment (trusted execution environment, TEE) in the electronic device.

The TEE is a security zone on a main processor of an electronic device (for example, a smartphone, a tablet computer, a set-top box, or a smart television), and can ensure security, confidentiality, and integrity of code and data loaded into the environment. The TEE provides an isolated execution environment, and security features provided by the TEE include isolated execution, integrity of a trusted application, confidentiality of trusted data, secure storage and/or the like. In general, execution space provided by the TEE provides a higher level of security than a common mobile operating system (for example, an input output system (input output system, IOS) or Android), and provides more functions than a secure element (secure element, SE), for example, a smart card or a SIM card.

In the electronic device, the TEE environment and the mobile operating system coexist, to provide a security function for an enriched mobile operating system environment. An application running in the TEE environment is referred to as a trusted application (trusted application, TA). The TA may access all functions of the main processor and a memory of the electronic device. A hardware isolation technology is used to protect the TA from being affected by an application installed in a main operating system environment. Moreover, software and password isolation technology inside the TEE can be used to protect TAs from affecting each other. In this way, a plurality of different service providers can be used at the same time without affecting security.

Based on the foregoing description, it can be learned that in the conventional technology, an electronic device performs permanent permission control after being authorized by a user. Embodiments of this application provide a permission negotiation method during communication, so that before a call or during a call, two communication parties can negotiate a permission item restricted for use in a current communication process.

The permission negotiation method during communication provided in embodiments of this application may be applied to an electronic device. The electronic device may be a device such as a smartphone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

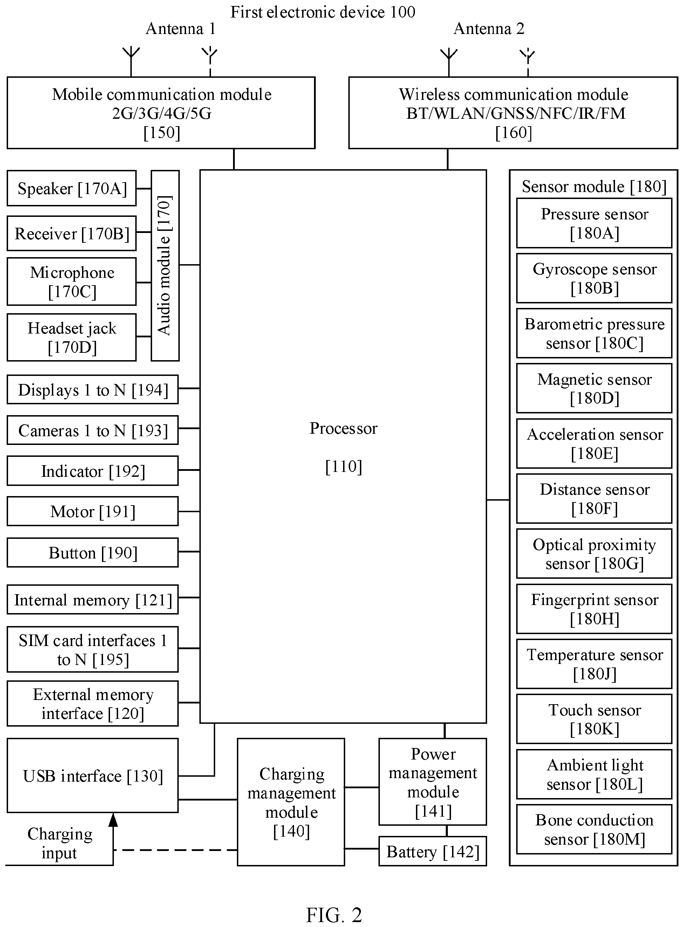

For example, FIG. 2 is a schematic diagram of a structure of a first electronic device according to an embodiment of this application. As shown in FIG. 2, a first electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not constitute a specific limitation on the first electronic device 100. In some other embodiments of this application, the first electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the first electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the first electronic device 100. The processor 110 communicates with the display 194 through the DSI interface, to implement a display function of the first electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to the charger to charge the first electronic device 100, or may be configured to transmit data between the first electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and constitutes no limitation on the structure of the first electronic device 100. In some other embodiments of this application, the first electronic device 100 may alternatively use an interface connection mode different from that in the foregoing embodiment, or use a combination of a plurality of interface connection modes.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the first electronic device 100. The charging management module 140 may further supply power to the first electronic device 100 by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the first electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device 100 may be configured to cover one or more communication bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 can provide a wireless communication solution that is applied to the first electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same component as the mobile communication module 150 or another function module.

The wireless communication module 160 may provide a wireless communication solution that is applied to the first electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the first electronic device 100, the antenna 1 and the mobile communication module 150 are coupled, and the antenna 2 and the wireless communication module 160 are coupled, so that the first electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The first electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the first electronic device 100 may include one or N displays 194, where N is a positive integer greater than 1.

The first electronic device 100 may implement a photographing function by using the ISP, the camera 193, the video codec, the GPU, the display 194, the application processor, and the like.

The ISP is configured to process data fed back by the camera 193. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the first electronic device 100 may include one or N cameras 193, where N is a positive integer greater than 1.

The digital signal processor is configured to process a digital signal, and may process another digital signal in addition to the digital image signal. For example, when the first electronic device 100 selects a frequency, the digital signal processor is configured to perform Fourier transformation on frequency energy.

The video codec is configured to compress or decompress a digital video. The first electronic device 100 may support one or more video codecs. In this way, the first electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. An application such as intelligent cognition, for example, image recognition, facial recognition, speech recognition, or text understanding of the first electronic device 100 may be implemented by using the NPU.

The external memory interface 120 may be configured to connect to an external memory card, for example, a micro SD card, to expand a storage capability of the first electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data and an address book) and the like created in a process of using the first electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the first electronic device 100 and data processing.

The first electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The first electronic device 100 may be used to listen to music or answer a call in a hands-free mode through the speaker 170A.

The receiver 170B, also referred to as an "earpiece", is configured to convert an electrical audio signal into a sound signal. When a call is answered or voice information is received through the first electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the first electronic device 100. In some other embodiments, two microphones 170C may be disposed in the first electronic device 100, to collect a sound signal and implement a noise reduction function. In some other embodiments, three, four, or more microphones 170C may alternatively be disposed in the first electronic device 100, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The first electronic device 100 determines intensity of pressure based on the change in the capacitance. When a touch operation is performed on the display 194, the first electronic device 100 detects intensity of the touch operation by using the pressure sensor 180A. The first electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing a message is performed. When a touch operation whose touch operation intensity is greater than or equal to the first pressure threshold is performed on the SMS message application icon, an instruction for creating a new SMS message is performed.

The gyroscope sensor 180B may be configured to determine a motion posture of the first electronic device 100. In some embodiments, an angular velocity of the first electronic device 100 around three axes (namely, axes x, y, and z) may be determined by using the gyroscope sensor 180B. The gyroscope sensor 180B may be configured to implement image stabilization during image shooting. For example, when the shutter is pressed, the gyroscope sensor 180B detects an angle at which the electronic device 100 jitters, obtains, through calculation based on the angle, a distance for which a lens module needs to compensate, and allows the lens to cancel a jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the first electronic device 100 calculates an altitude based on a barometric pressure value measured by the barometric pressure sensor 180C, to assist in positioning and navigation.

The magnetic sensor 180D includes a Hall sensor. The first electronic device 100 may detect opening and closing of a flip cover by using the magnetic sensor 180D. In some embodiments, when the first electronic device 100 is a flip phone, the first electronic device 100 may detect opening and closing of a flip cover through the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the first electronic device 100. When the first electronic device 100 is still, the acceleration sensor 180E may detect a magnitude and a direction of gravity. The acceleration sensor 180E may be further configured to identify a posture of the electronic device, and is used in an application such as switching between a landscape mode and a portrait mode or a pedometer.

The distance sensor 180F is configured to measure a distance. The first electronic device 100 may measure the distance through infrared or a laser. In some embodiments, in an image shooting scenario, the first electronic device 100 may measure a distance by using the distance sensor 180F to implement quick focusing.

The optical proximity sensor 180G may include, for example, a light emitting diode (LED) and an optical detector, for example, a photodiode. The light emitting diode may be an infrared light emitting diode. The first electronic device 100 emits infrared light through the light-emitting diode. The first electronic device 100 detects infrared reflected light from a nearby object through the photodiode. When detecting sufficient reflected light, the first electronic device 100 may determine that there is an object near the first electronic device 100. When detecting insufficient reflected light, the first electronic device 100 may determine that there is no object near the first electronic device 100. The first electronic device 100 may detect, through the optical proximity sensor 180G, that the user holds the first electronic device 100 close to an ear during a call, so that the first electronic device 100 automatically turns off a screen for power saving. The optical proximity sensor 180G may also be used in a smart cover mode or a pocket mode to automatically perform screen unlocking or locking.

The ambient light sensor 180L is configured to sense ambient light brightness. The first electronic device 100 may adaptively adjust brightness of the display 194 based on the sensed ambient light brightness. The ambient light sensor 180L may also be configured to automatically adjust white balance during image shooting. The ambient light sensor 180L may also cooperate with the optical proximity sensor 180G to detect whether the first electronic device 100 is in a pocket, to avoid an accidental touch.

The fingerprint sensor 180H is configured to collect a fingerprint. The first electronic device 100 may use a feature of the collected fingerprint to implement fingerprint-based unlocking, application lock accessing, fingerprint-based photographing, fingerprint-based call answering, and the like.

The temperature sensor 180J is configured to detect a temperature. In some embodiments, the first electronic device 100 executes a temperature processing policy based on the temperature detected by the temperature sensor 180J. For example, when the temperature reported by the temperature sensor 180J exceeds a threshold, the first electronic device 100 degrades performance of a processor near the temperature sensor 180J, to reduce power consumption for thermal protection. In some other embodiments, when the temperature is less than another threshold, the first electronic device 100 heats the battery 142, to avoid a case in which the first electronic device 100 is shut down abnormally due to a low temperature. In some other embodiments, when the temperature is less than still another threshold, the first electronic device 100 boosts an output voltage of the battery 142 to avoid abnormal shutdown due to a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the first electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The first electronic device 100 may receive a button input, and generate a button signal input related to a user setting and function control of the first electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with and separation from the first electronic device 100. The first electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The first electronic device 100 interacts with a network through the SIM card, to implement a call function, a data communication function, and the like. In some embodiments, the first electronic device 100 uses an eSIM, namely, an embedded SIM card. The eSIM card may be embedded in the first electronic device 100, and cannot be separated from the first electronic device 100.

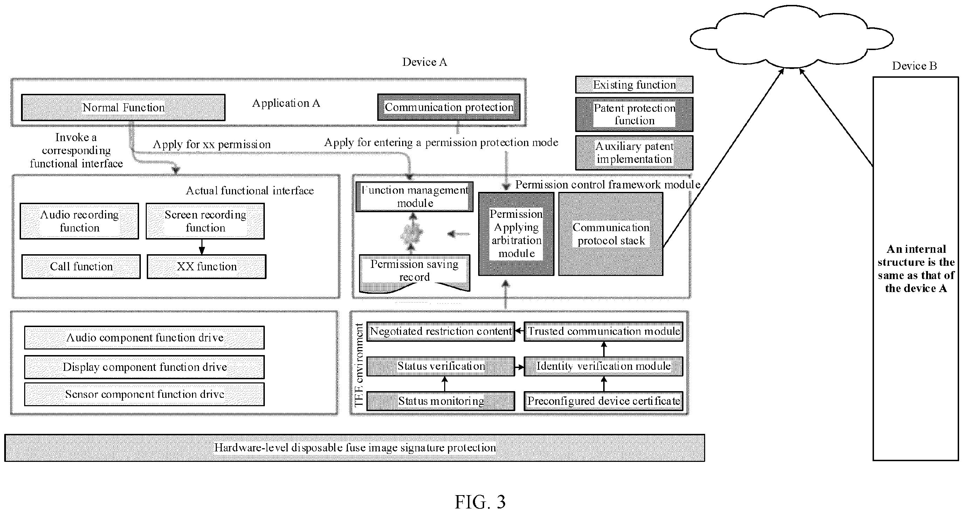

A software structure of the first electronic device 100 may be shown in FIG. 3. FIG. 3 is a schematic diagram of the software structure of the first electronic device 100 according to an embodiment of this application. The first electronic device 100 may be a device A in FIG. 3. Refer to the software structure of the device A in FIG. 3. The software structure of the first electronic device 100 may include an application (for example, the application A), an actual functional interface, a function driver, a permission control framework module, a TEE environment, and the like.

For ease of understanding, in the following embodiments of this application, an electronic device having the structures shown in FIG. 2 and FIG. 3 is used as an example to describe in detail, with reference to the accompanying drawings and application scenarios, a permission negotiation method during communication provided in embodiments of this application.

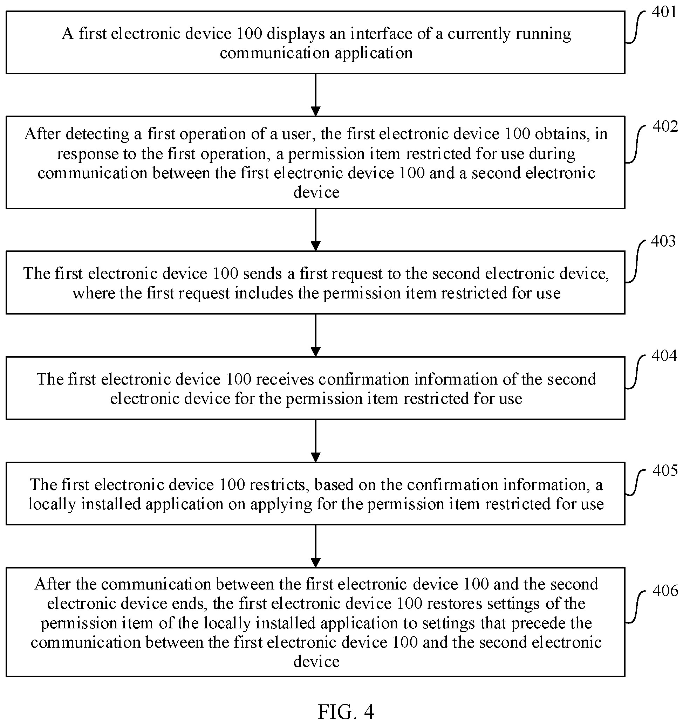

FIG. 4 is a flowchart of a permission negotiation method during communication according to an embodiment of this application. As shown in FIG. 4, the permission negotiation method may include the following steps.

Step 401: The first electronic device 100 displays an interface of a currently running communication application.

Specifically, the first electronic device 100 may implement an operation in the step 401 by using a GPU, the display 194, an application processor, and the like.

Step 402: After detecting a first operation of a user, the first electronic device 100 obtains, in response to the first operation, a permission item restricted for use during communication between the first electronic device 100 and a second electronic device.

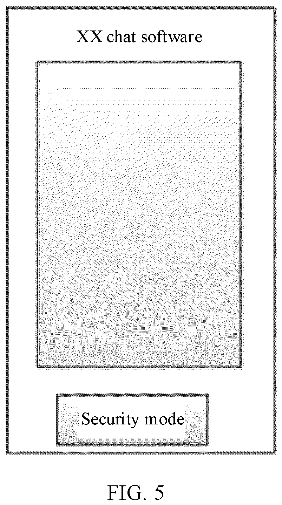

Specifically, the first operation may include a trigger operation performed by the user on a "security mode" icon on a display interface of the currently running communication application. As shown in FIG. 5, the display interface of the currently running communication application includes the "security mode" icon. FIG. 5 is a schematic diagram of the display interface of the currently running communication application according to an embodiment of this application. The user may tap, double-tap, or touch and hold the "security mode" icon, or the user may perform another type of triggering operation on the "security mode" icon, to enable a secure communication mode. A type of the triggering operation performed by the user on the "security mode" icon is not limited in this embodiment.

Alternatively, the first operation may be an operation in another form. For example, on the display interface of the currently running communication application, the user touches and holds a user identifier (for example, a user name) of the second electronic device, and selects a secure communication mode from a pop-up menu. Alternatively, on the display interface of the currently running communication application, it is detected that duration for which the user presses a mechanical button (for example, an on/off button and/or a volume button) reaches preset duration, where the preset duration may be set by the user during specific implementation. A specific operation form of the first operation is not limited in this embodiment.

In descriptions of the following embodiments of this application, an example in which the first operation is tapping the "security mode" icon by the user is used for description.

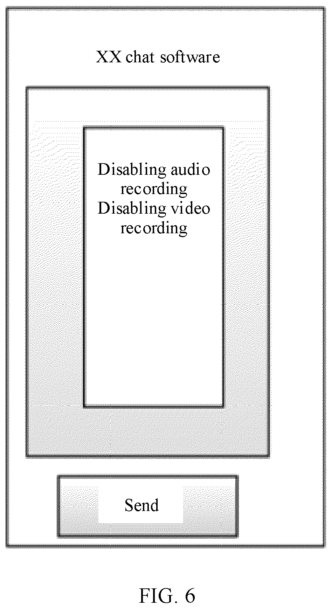

Further, after the user performs the first operation, the user may set a permission item that the user expects to be restricted for use during communication between the first electronic device 100 and the second electronic device, and then the first electronic device 100 may obtain the permission item restricted for use during communication between the first electronic device 100 and the second electronic device. FIG. 6 is a schematic diagram of obtaining a permission item restricted for use according to an embodiment of this application. It can be learned from FIG. 6 that the permission items restricted for use include: disabling audio recording and disabling video recording.

Specifically, the first electronic device 100 may implement, by using the processor 110, the display 194, and the touch sensor 180K, a function of detecting the first operation in the step 402, and obtain, by using the processor 110, the permission item restricted for use.

Step 403: The first electronic device 100 sends a first request to the second electronic device, where the first request includes the permission item restricted for use.

Refer to FIG. 6. After the user sets the permission item that the user expects to be restricted for use, the user taps a "Send" icon, so that the first electronic device 100 may send, in response to an operation that the user taps the "Send" icon, the first request to the second electronic device.

Specifically, an interface for sending the first request to the second electronic device may be added to a communication protocol stack in the permission control framework module in FIG. 3, and the first request is sent by using a local communication protocol.

For example, if permission restricted for use in a current communication is to disable screen recording, the following functions need to be disabled:
android.permission.WRITE_EXTERNAL_STORAGE;
android.permission.READ_EXTERNAL_STORAGE; and
android.permission.RECORD_AUDIO.

In this case, the first request may carry the following data: "WRITE_EXTERNAL_STORAGE; READ_EXTERNAL_STORAGE; and RECORD AUDIO".

During specific implementation, the first electronic device 100 may implement an operation in the step 403 by using the processor 110, the antenna 1, and the mobile communication module 150, and/or by using the processor 110, the antenna 2, and the wireless communication module 160.

Step 404: The first electronic device 100 receives confirmation information of the second electronic device for the permission item restricted for use.

During specific implementation, the first electronic device 100 may implement an operation in the step 404 by using the processor 110, the antenna 1, and the mobile communication module 150, and/or by using the processor 110, the antenna 2, and the wireless communication module 160.

Step 405: The first electronic device 100 restricts, based on the confirmation information, a locally installed application on applying for the permission item restricted for use.

Specifically, after receiving the confirmation information of the second electronic device for the permission item restricted for use, the communication protocol stack in the permission control framework module in FIG. 3 may notify a permission applying arbitration module in the permission control framework module to restrict, based on the confirmation information, the locally installed application on applying for the permission item restricted for use.

During specific implementation, that the first electronic device 100 restricts, based on the confirmation information, the locally installed application on applying for the permission item restricted for use may be: The first electronic device 100 obtains, based on the confirmation information, a permission item confirmed by the second electronic device in the permission items restricted for use, and then restricts the locally installed application on applying for the permission item confirmed by the second electronic device.

Refer to FIG. 3. After receiving a notification of the communication protocol, the permission applying arbitration module obtains, based on the confirmation information, the permission item confirmed by the second electronic device in the permission items restricted for use. During communication between the first electronic device 100 and the second electronic device, to prevent the currently running communication application and another background application from illegally performing an operation, the permission applying arbitration module may refuse to apply, by the locally installed application, for the permission item confirmed by the second electronic device. This is mainly modified in a permission management service. For example, framework-res.apk or a similar service management module may dynamically disable the permission item that is confirmed by the second electronic device and that is in the first electronic device 100.

During specific implementation, the first electronic device 100 may implement an operation in the step 405 by using the processor 110.

Step 406: After the communication between the first electronic device 100 and the second electronic device ends, the first electronic device 100 restores settings of the permission item of the locally installed application to settings that precede the communication between the first electronic device 100 and the second electronic device.

Specifically, if two communication parties hang up a call, or the communication cannot continue due to another reason, a current permission agreement is no longer valid. After obtaining disabling information of the currently running communication application and/or notification information of the communication protocol stack, a permission applying arbitration module in each of electronic devices used by the two communication parties may restore the settings of the permission item of the locally installed application to the settings that precede the communication between the first electronic device and the second electronic device.

During specific implementation, the first electronic device 100 may implement an operation in the step 406 by using the processor 110.

In the foregoing permission negotiation method during communication, the first electronic device 100 displays the interface of the currently running communication application; and after detecting the first operation of the user, obtains, in response to the first operation, the permission item restricted for use in the process communication between the first electronic device 100 and the second electronic device. Then, the first electronic device 100 sends the first request to the second electronic device, where the first request includes the permission item restricted for use; receives the confirmation information of the second electronic device for the permission item restricted for use; and restricts, based on the confirmation information, the locally installed application on applying for the permission item restricted for use. Finally, after the communication between the first electronic device 100 and the second electronic device ends, the first electronic device 100 restores the settings of the permission item of the locally installed application to the settings that precede the communication between the first electronic device 100 and the second electronic device. Therefore, before or during a call, the two communication parties can negotiate the permission item restricted for use during communication. In addition, after the communication ends, the settings of the permission item may be restored to permission settings that precede the communication. This does not affect normal use of the electronic device and does not require hardware investment.

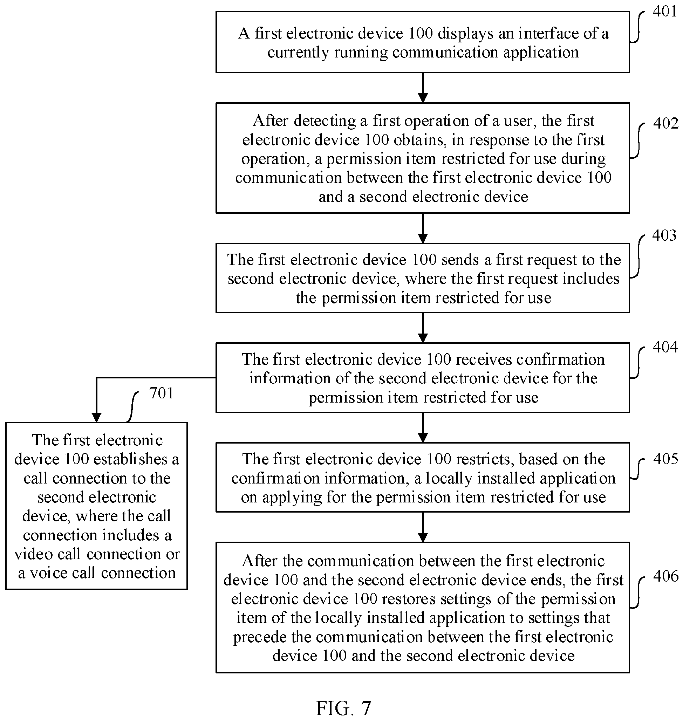

FIG. 7 is a flowchart of a permission negotiation method during communication according to another embodiment of this application. As shown in FIG. 7, in the embodiment shown in FIG. 4 of this application, after the step 404, the method may further include the following step.

Step 701: The first electronic device 100 establishes a call connection to the second electronic device, where the call connection includes a video call connection or a voice call connection.

In other words, before establishing the call connection to the second electronic device, the user may send the first request to the second electronic device. After receiving the confirmation information of the second electronic device for the permission item restricted for use, the first electronic device 100 establishes the call connection to the second electronic device.

During specific implementation, the first electronic device 100 may implement an operation in the step 701 by using the processor 110, the antenna 1, and the mobile communication module 150, and/or by using the processor 110, the antenna 2, and the wireless communication module 160.

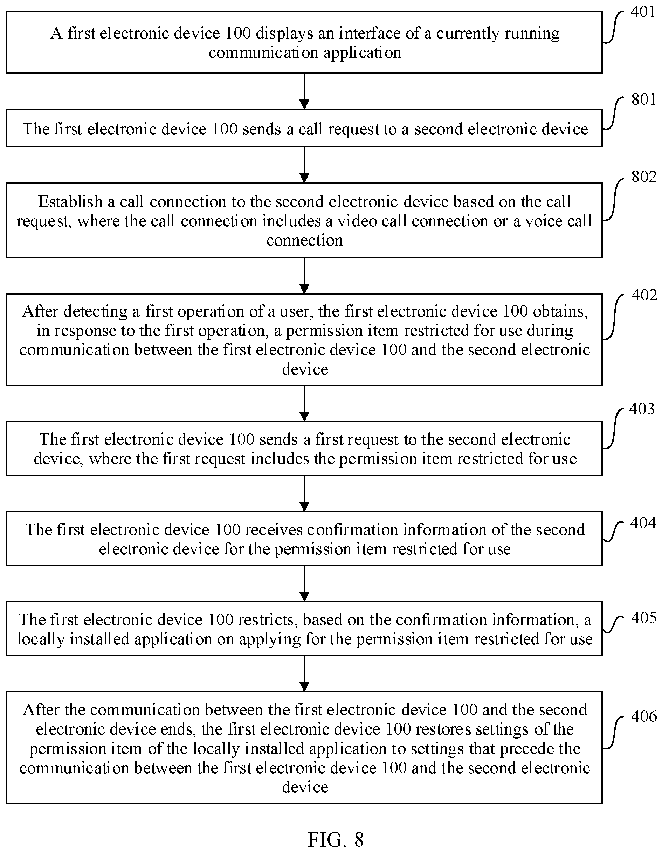

FIG. 8 is a flowchart of a permission negotiation method during communication according to still another embodiment of this application. As shown in FIG. 8, in the embodiment shown in FIG. 4 of this application, after the step 401 and before the step 402, the method may further include the following steps.

Step 801: The first electronic device 100 sends a call request to the second electronic device.

Step 802: Establish a call connection to the second electronic device based on the call request. The call connection includes a video call connection or a voice call connection.

In other words, the first electronic device 100 may first establish the call connection to the second electronic device, and then send the first request to the second electronic device.

During specific implementation, the first electronic device 100 may implement an operation in the step 801 by using the processor 110, the antenna 1, and the mobile communication module 150, and/or by using the processor 110, the antenna 2, and the wireless communication module 160.

In the embodiments shown in FIG. 7 and FIG. 8 of this application, after establishing the call connection to the second electronic device, if the permission item confirmed by the second electronic device includes all of permission items in the permission items restricted for use, the first electronic device 100 displays prompt information indicating that the call connection is a secure call connection; or if the permission item confirmed by the second electronic device is empty, or the permission item confirmed by the second electronic device includes some of permission items in the permission items restricted for use, the first electronic device 100 displays prompt information indicating that the call connection is a non-secure call connection.

Specifically, the first electronic device 100 may prompt, in a form of a text on the display interface of the currently running communication application, that the call connection is a secure call connection or a non-secure call connection, or may display an icon on the display interface of the currently running communication application, to prompt, with different colors of the icon, that the call connection is a secure call connection or a non-secure call connection. A manner in which the first electronic device 100 displays the prompt information is not limited in this embodiment.

During specific implementation, the first electronic device 100 may implement an operation of displaying the prompt information by using the processing 110 and the display 194.

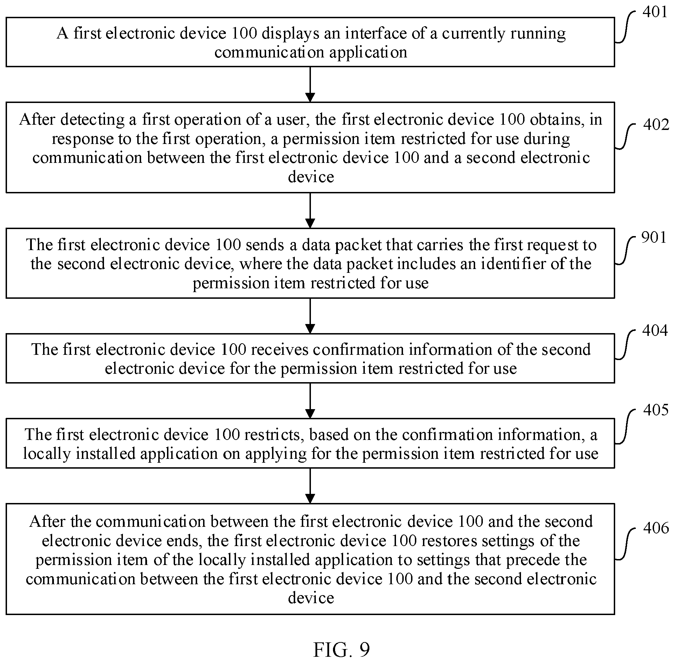

FIG. 9 is a flowchart of a permission negotiation method during communication according to yet another embodiment of this application. As shown in FIG. 9, in the embodiment shown in FIG. 4 of this application, the step 403 may be:

Step 901: The first electronic device 100 sends a data packet that carries the first request to the second electronic device, where the data packet includes an identifier of the permission item restricted for use.

The identifier of the permission item restricted for use may be a name of the permission item restricted for use, or the identifier of the permission item restricted for use may be another type of information, provided that the permission item restricted for use can be indicated. The identifier of the permission item restricted for use is not limited in this embodiment.

For example, the data packet that carries the first request carries the name of the permission item restricted for use. If the permission item restricted for use in the current communication is disabling recording, the data packet may carry "android.permission.RECORD_AUDIO", to agree that both communication parties cannot perform an audio recording operation during communication.

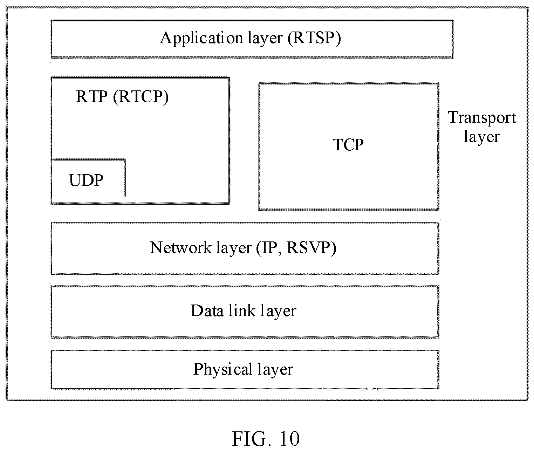

Specifically, the first electronic device 100 may send the data packet that carries the first request to the second electronic device by using a user datagram protocol (user datagram protocol, UDP). FIG. 10 is a schematic diagram of implementation at a communication level according to an embodiment of this application. In FIG. 10, a real time streaming protocol (real time streaming protocol, RTSP) is used to initiate/terminate streaming media, a real-time transport protocol (real-time transport protocol, RTP) is used to transport streaming media data, a real-time transport control protocol (real-time transport control protocol, RTCP) is used to control and synchronize the RTP, and the UDP provides an application program with a method for sending a data packet without establishing a connection. The RTSP belongs to an application layer, and the RTP, the RTCP, and the UDP belong to a transport layer.

Certainly, the first electronic device 100 may also send the data packet that carries the first request to the second electronic device by using another communication protocol. A communication protocol used by the first electronic device 100 is not limited in this embodiment. This embodiment is described by using an example in which the first electronic device 100 sends the data packet that carries the first request to the second electronic device by using the UDP.

During specific implementation, the first electronic device 100 may implement an operation in the step 901 by using the processor 110, the antenna 1, and the mobile communication module 150, and/or by using the processor 110, the antenna 2, and the wireless communication module 160.

In this embodiment, the data packet may include one or a combination of the following fields: a data packet header field, a type field, a subtype field, and an information embedding field. Specifically, when a value of the type field is a first preset value, and a value of the subtype field is a second preset value, the data packet is a data packet that carries the first request, and data carried in the information embedding field is the first request. The first preset value and the second preset value may be set during specific implementation. The first preset value and the second preset value are not limited in this embodiment.

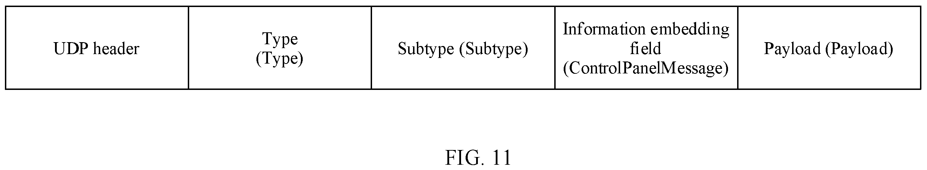

The UDP is used as an example. A format of a data packet may be shown in FIG. 11. FIG. 11 is a schematic diagram of a format of a data packet according to an embodiment of this application. In FIG. 11, a UDP header is a data packet header field, Type is a type field, Subtype is a subtype field, and ControlPanelMessage is an information embedding field. In addition, the data packet may further include a payload (Payload) field.

Specifically, the Type field describes a type of data content transmitted in the data packet, and different values of the Type field represent different data service types. For example, a value of the Type field and a data service type represented by the Type field may be shown as follows: 1: audio RTP; 2: audio RTCP; 3: video RTP; 4: video RTCP; 5: permission remote authentication protocol (RemoteAuthProtocol).

The Subtype field describes a specific functional action of each data service type, for example, a request or a response. For example, a value of the Subtype field and a corresponding functional action may be shown as follows: 1: initial request (InitReq); 2: initial response (InitRes); 3: InitRRes; 4: authentication request (AuthReq); 5: authentication response (AuthRes).

The information embedding field (ControlPanelMessage) carries data to be actually transmitted. In this embodiment, the data carried in the information embedding field (ControlPanelMessage) includes the identifier of the permission item restricted for use.

In this way, in this example, when the first preset value is 5 and the second preset value is 4, the data packet is a data packet that carries the first request, and the data carried in the information embedding field is the first request.

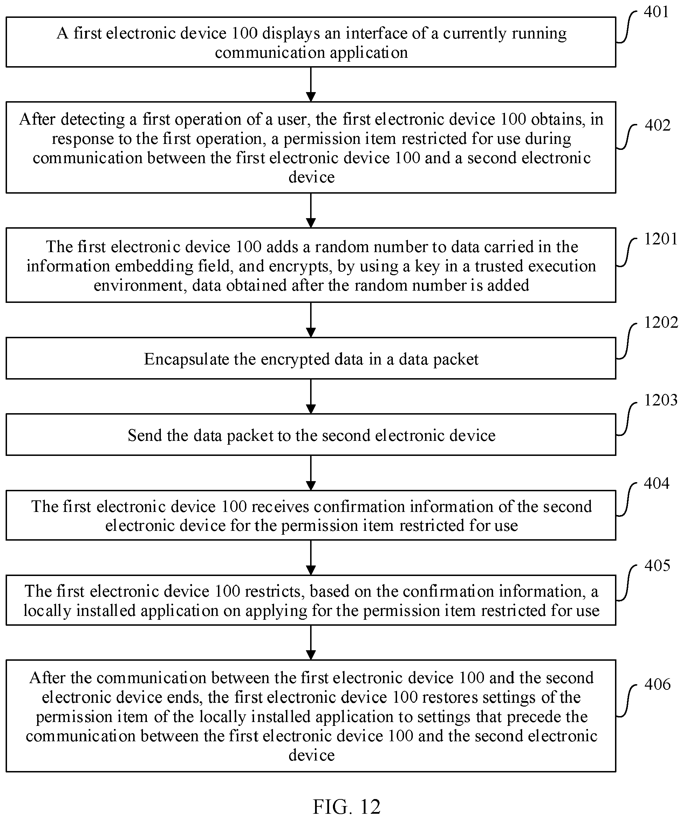

FIG. 12 is a flowchart of a permission negotiation method during communication according to still yet another embodiment of this application. As shown in FIG. 12, in the embodiment shown in FIG. 9 of this application, the step 901 may include the following steps.

Step 1201: The first electronic device 100 adds a random number to the data carried in the information embedding field, and encrypts, by using a key in a trusted execution environment, data obtained after the random number is added.

The data carried in the information embedding field includes the identifier of the permission item restricted for use.

Specifically, the first electronic device 100 may encrypt, by using a private key in the key of the TEE, the data obtained after the random number is added. The random number is added, to prevent the data carried in the information embedding field from being illegally filled after being reserved. The random number is different during each communication, to ensure uniqueness.

Step 1202: Encapsulate the encrypted data in the data packet.

Step 1203: Send the data packet to the second electronic device.

During specific implementation, the first electronic device 100 may implement operations in the step 1201 and the step 1202 by using the processor 110; and implement an operation in the step 1203 by using the processor 110, the antenna 1, and the mobile communication module 150, and/or by using the processor 110, the antenna 2, and the wireless communication module 160.

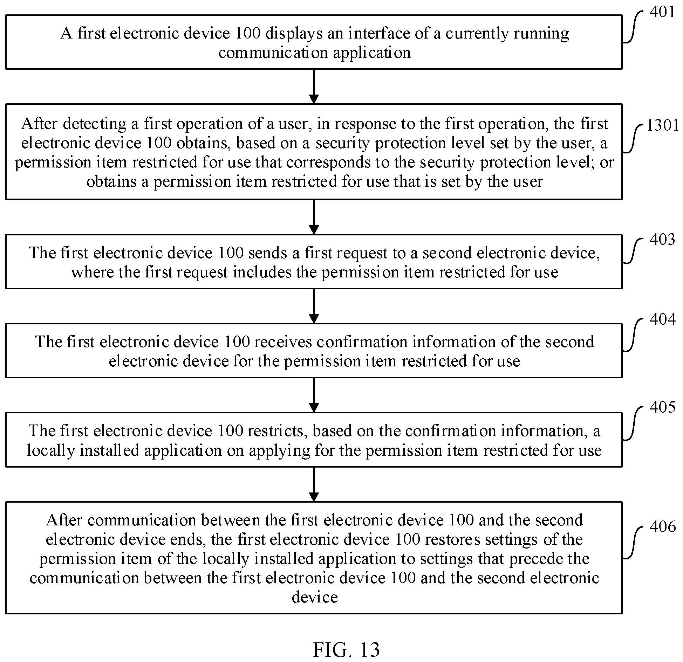

FIG. 13 is a flowchart of a permission negotiation method during communication according to a further embodiment of this application. As shown in FIG. 13, in the embodiment shown in FIG. 4 of this application, the step 402 may be:

Step 1301: After detecting a first operation of a user, in response to the first operation, the first electronic device 100 obtains, based on a security protection level set by the user, a permission item restricted for use that corresponds to the security protection level; or obtains a permission item restricted for use that is set by the user.

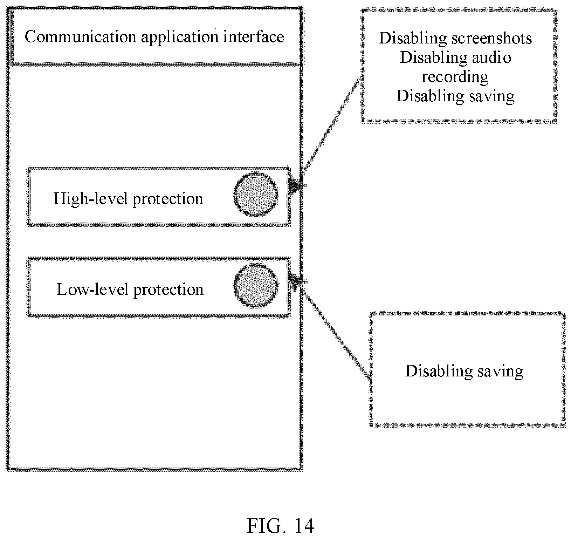

Specifically, in an implementation, after performing the first operation, the user may set a security protection level, and the first electronic device 100 obtains, based on the security protection level set by the user, the permission item restricted for use that corresponds to the security protection level. FIG. 14 is a schematic diagram of an interface for setting a security protection level according to an embodiment of this application. It can be learned from FIG. 14 that the security protection level includes two levels: high-level protection and low-level protection. Permission items restricted for use that correspond to the high-level protection includes disabling screenshots, disabling audio recording, and disabling saving. A permission item restricted for use that corresponds to the low-level protection includes disabling saving.

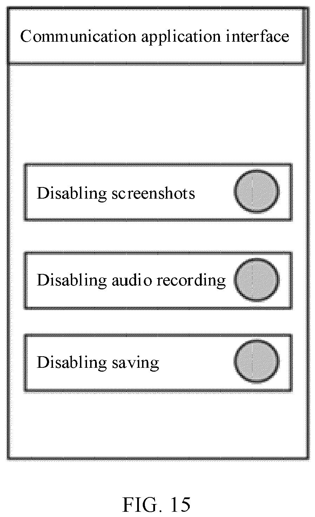

In another implementation, after performing the first operation, the user may directly set a permission item restricted for use, and the first electronic device 100 obtains the permission item restricted for use that is set by the user. FIG. 15 is a schematic diagram of an interface for setting a permission item restricted for use according to an embodiment of this application. The interface shown in FIG. 15 includes three permission items restricted for use: disabling screenshots, disabling audio recording, and disabling saving. The user may select, on the interface, the permission item restricted for use.

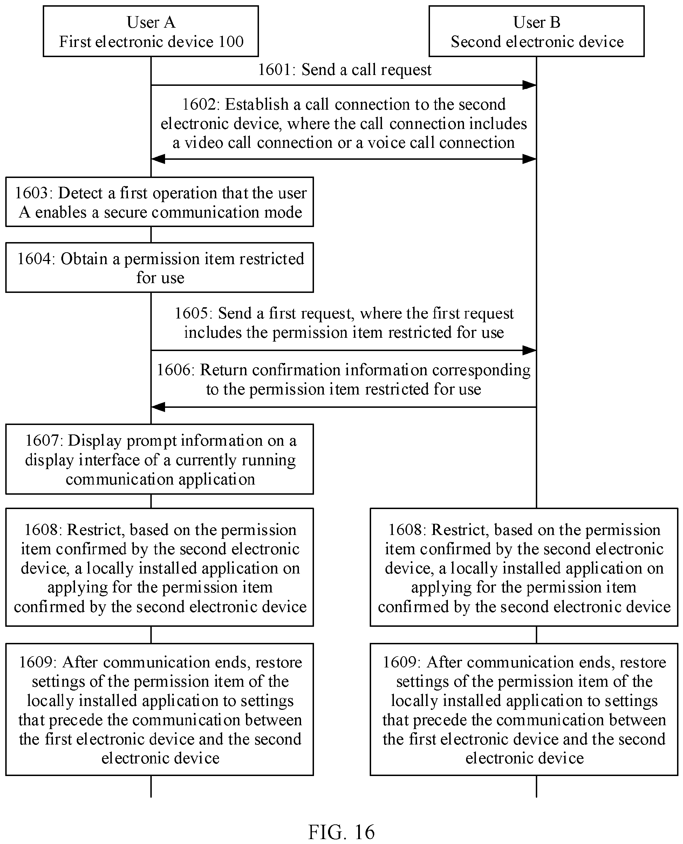

FIG. 16 is a flowchart of a permission negotiation method during communication according to a still further embodiment of this application. As shown in FIG. 16, the permission negotiation method may include the following steps.

Step 1601: A user A sends, by using a communication application in the first electronic device 100 used by the user A, a call request to a second electronic device used by a user B.

Step 1602: The first electronic device 100 establishes a call connection to the second electronic device based on the call request, where the call connection includes a video call connection or a voice call connection.

Step 1603: The user A considers that he or she is about to discuss confidential content with the user B, and therefore taps the "security mode" icon in FIG. 5, and the first electronic device 100 detects a first operation that the user A enables a secure communication mode.

Step 1604: The first electronic device 100 displays, to the user A in response to the first operation, the interface shown in FIG. 14 or FIG. 15, and after the user A completes setting, the first electronic device 100 obtains a permission item restricted for use.

Step 1605: The first electronic device 100 sends a first request to the second electronic device, where the first request includes the permission item restricted for use.

Step 1606: After the second electronic device receives the first request, the user B taps a confirm or accept button, and the second electronic device returns confirmation information corresponding to the permission item restricted for use to the first electronic device 100.

Step 1607: After receiving the confirmation information of the second electronic device, the first electronic device 100 obtains, based on the confirmation information, a permission item confirmed by the second electronic device in the permission items restricted for use. If the permission item confirmed by the second electronic device includes all of permission items in the permission items restricted for use, the first electronic device 100 displays prompt information on a display interface of a currently running communication application. The prompt information is used to prompt the user A that the call connection is a secure call connection.

Step 1608: The first electronic device 100 and the second electronic device restrict, based on the permission item confirmed by the second electronic device, a locally installed application on applying for the permission item confirmed by the second electronic device.

Step 1609: After communication ends, the first electronic device 100 and the second electronic device restore settings of the permission item of the locally installed application to settings that precede the communication between the first electronic device 100 and the second electronic device.

According to the permission negotiation method during communication provided in this embodiment of this application, before establishing a communication connection or during a call, the first electronic device 100 and the second electronic device may negotiate a permission item restricted for use based on a communication protocol. After the negotiation succeeds, the permission applying arbitration module in FIG. 3 is enabled to temporarily restrict functions such as audio recording and/or screen recording of the first electronic device 100. After the communication ends, the settings of the permission item of the locally installed application may be restored to the settings that precede the communication. This does not affect normal use of the first electronic device 100 and does not require hardware investment, so that the user can implement the foregoing functions at a minimum cost.

It may be understood that some or all of the steps or operations in the foregoing embodiments are merely examples. In embodiments of this application, other operations or variations of various operations may be further performed. In addition, the steps may be performed in a sequence different from that presented in the foregoing embodiments, and not all operations in the foregoing embodiments may need to be performed.

It may be understood that, to implement the foregoing functions, the electronic device includes corresponding hardware and/or software modules for performing the functions. Algorithm steps in the examples described with reference to embodiments disclosed in this application can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into function modules according to the foregoing method embodiments. For example, each function module may be obtained through division based on each corresponding function, or two or more functions may be integrated into one module. The integrated module may be implemented in a form of hardware. It should be noted that, in embodiments, division into modules is an example and is merely logical function division. During actual implementation, there may be another division manner.

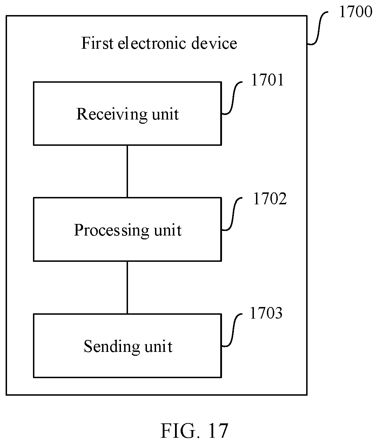

FIG. 17 is a schematic diagram of a structure of a first electronic device according to another embodiment of this application. When function modules are obtained through division by using corresponding functions, FIG. 17 is a schematic diagram of possible composition of a first electronic device 1700 according to the foregoing embodiment. As shown in FIG. 17, the first electronic device 1700 may include a receiving unit 1701, a processing unit 1702, and a sending unit 1703.

The receiving unit 1701 may be configured to support the first electronic device 1700 in performing the step 404, the step 701, the step 802, and the like, and/or configured to perform another process of the technical solutions described in embodiments of this application.

The processing unit 1702 may be configured to support the first electronic device 1700 in performing the step 401, the step 402, the step 405, the step 406, the step 701, the step 802, the step 1201, the step 1202, the step 1301, and the like, and/or configured to perform another process of the technical solution described in embodiments of this application.

The sending unit 1703 may be configured to support the first electronic device 1700 in performing the step 403, the step 701, the step 801, the step 802, the step 901, the step 1203, and the like, and/or configured to perform another process of the technical solution described in embodiments of this application.

It should be noted that all related content of the steps involved in the foregoing method embodiments may be cited in function descriptions of corresponding function modules. Details are not described herein again.

The first electronic device 1700 provided in this embodiment is configured to perform the foregoing permission negotiation method during communication. Therefore, an effect the same as the effect of the foregoing method can be achieved.

It should be understood that the first electronic device 1700 may correspond to the first electronic device 100 shown in FIG. 1. Functions of the receiving unit 1701 and the sending unit 1703 may be implemented by the processor 110, the antenna 1, and the mobile communication module 150 in the first electronic device 100 shown in FIG. 1, and/or by the processor 110, the antenna 2, and the wireless communication module 160 in the first electronic device 100 shown in FIG. 1. Functions of the processing unit 1702 may be implemented by the processor 110, the display 194, and/or the touch sensor 180K in the first electronic device 100 shown in FIG. 1.

When an integrated unit is used, the first electronic device 1700 may include a processing module, a storage module, and a communication module.

The processing module may be configured to control and manage an action of the first electronic device 1700, for example, may be configured to support the first electronic device 1700 in performing the steps performed by the receiving unit 1701, the processing unit 1702, and the sending unit 1703. The storage module may be configured to support the first electronic device 1700 in storing program code, data, and the like. The communication module may be configured to support the first electronic device 1700 in communicating with another device.

The processing module may be a processor or a controller, and may implement or execute various example logic blocks, modules, and circuits described with reference to content disclosed in this application. The processor may alternatively be a combination of processors implementing a computing function, for example, a combination of one or more microprocessors or a combination of a digital signal processor (digital signal processor, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor and the storage module is a memory, the first electronic device 1700 in this embodiment may be a device having the structure shown in FIG. 1.

An embodiment of this application further provides a computer-readable storage medium. The computer-readable storage medium stores a computer program. When the computer program is run on a computer, the computer is enabled to perform the method provided in the embodiments shown in FIG. 4 to FIG. 16 in this application.

An embodiment of this application further provides a computer program product. The computer program product includes a computer program. When the computer program is run on a computer, the computer is enabled to perform the method provided in the embodiments shown in FIG. 4 to FIG. 16 in this application.

In embodiments of this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B may be in a singular form or a plural form. The character "/" generally indicates an "or" relationship between the associated objects. "At least one of the following items" and a similar expression refer to any combination of these items, including a single item or any combination of a plurality of items. For example, at least one of a, b, or c may indicate a, b, c, a and b, a and c, b and c, or a, b, and c, where a, b, and c may be singular or plural.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments of this application, when any of the functions are implemented in a form of a software function unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A permission negotiation method during communication, applied to an electronic device, wherein the method comprises:
displaying, by a first electronic device, an interface of a currently running communication application;
after detecting a first operation of a user, obtaining, in response to the first operation, a permission item restricted for use during communication between the first electronic device and a second electronic device;
sending a first request to the second electronic device, wherein the first request comprises the permission item restricted for use;
receiving confirmation information of the second electronic device for the permission item restricted for use;
restricting, based on the confirmation information, a locally installed application on applying for the permission item restricted for use; and
after communication between the first electronic device and the second electronic device ends, restoring settings of the permission item of the locally installed application to settings that precede the communication between the first electronic device and the second electronic device.

2. The method according to claim 1, wherein the restricting, based on the confirmation information, a locally installed application on applying for the permission item restricted for use comprises:
obtaining, based on the confirmation information, a permission item confirmed by the second electronic device in the permission items restricted for use; and
restricting the locally installed application on applying for the permission item confirmed by the second electronic device.

3. The method according to claim 2, wherein after the receiving confirmation information of the second electronic device for the permission item restricted for use, the method further comprises:
establishing a call connection to the second electronic device, wherein the call connection comprises a video call connection or a voice call connection.

4. The method according to claim 2, wherein after the displaying, by a first electronic device, an interface of a currently running communication application, and before the detecting a first operation of a user, the method further comprises:
sending a call request to the second electronic device; and
establishing a call connection to the second electronic device based on the call request, wherein the call connection comprises a video call connection or a voice call connection.

5. The method according to claim 3 or 4, wherein after the establishing a call connection to the second electronic device, the method further comprises:
if the permission item confirmed by the second electronic device comprises all of permission items in the permission items restricted for use, displaying prompt information indicating that the call connection is a secure call connection; or
if the permission item confirmed by the second electronic device is empty, or the permission item confirmed by the second electronic device comprises some of permission items in the permission items restricted for use, displaying prompt information indicating that the call connection is a non-secure call connection.

6. The method according to any one of claims 1 to 4, wherein the sending a first request to the second electronic device, wherein the first request comprises the permission item restricted for use comprises:
sending a data packet that carries the first request to the second electronic device, wherein the data packet comprises an identifier of the permission item restricted for use.

7. The method according to claim 6, wherein the data packet comprises one or a combination of the following fields: a data packet header field, a type field, a subtype field, and an information embedding field, wherein
when a value of the type field is a first preset value, and a value of the subtype field is a second preset value, the data packet is a data packet that carries the first request, and data carried in the information embedding field is the first request.

8. The method according to claim 7, wherein the sending a data packet that carries the first request to the second electronic device comprises:
adding a random number to the data carried in the information embedding field, and encrypting, by using a key in a trusted execution environment, data obtained after the random number is added;
encapsulating the encrypted data in the data packet; and
sending the data packet to the second electronic device.

9. The method according to any one of claims 1 to 4, wherein the obtaining a permission item restricted for use during communication between the first electronic device and a second electronic device comprises:
obtaining, based on a security protection level set by the user, a permission item restricted for use that corresponds to the security protection level; or
obtaining a permission item restricted for use that is set by the user.

10. A permission negotiation apparatus during communication, configured to perform the method according to any one of claims 1 to 9.

11. A first electronic device, comprising:
one or more processors, a memory, a plurality of applications, and one or more computer programs, wherein the one or more computer programs are stored in the memory, the one or more computer programs comprise instructions, and when the instructions are executed by the first electronic device, the first electronic device is enabled to perform the following steps:
displaying an interface of a currently running communication application;
after detecting a first operation of a user, obtaining, in response to the first operation, a permission item restricted for use during communication between the first electronic device and a second electronic device;
sending a first request to the second electronic device, wherein the first request comprises the permission item restricted for use;
receiving confirmation information of the second electronic device for the permission item restricted for use;
restricting, based on the confirmation information, a locally installed application on applying for the permission item restricted for use; and
after communication between the first electronic device and the second electronic device ends, restoring settings of the permission item of the locally installed application to settings that precede the communication between the first electronic device and the second electronic device.

12. The first electronic device according to claim 11, wherein when the instructions are executed by the first electronic device, the first electronic device is enabled to perform the step of restricting, based on the confirmation information, the locally installed application on applying for the permission item restricted for use, and the step of restricting, based on the confirmation information, the locally installed application on applying for the permission item restricted for use comprises:
obtaining, based on the confirmation information, a permission item confirmed by the second electronic device in the permission items restricted for use; and
restricting the locally installed application on applying for the permission item confirmed by the second electronic device.

13. The first electronic device according to claim 12, wherein when the instructions are executed by the first electronic device, after performing the step of receiving the confirmation information of the second electronic device for the permission item restricted for use, the first electronic device is enabled to further perform the following step:
establishing a call connection to the second electronic device, wherein the call connection comprises a video call connection or a voice call connection.

14. The first electronic device according to claim 12, wherein when the instructions are executed by the first electronic device, after performing the step of displaying the interface of the currently running communication application, and before performing the step of detecting the first operation of the user, the first electronic device is enabled to further perform the following steps:
sending a call request to the second electronic device; and
establishing a call connection to the second electronic device based on the call request, wherein the call connection comprises a video call connection or a voice call connection.

15. The first electronic device according to claim 13 or 14, wherein when the instructions are executed by the first electronic device, after performing the step of establishing the call connection to the second electronic device, the first electronic device is enabled to further perform the following step:
if the permission item confirmed by the second electronic device comprises all of permission items in the permission items restricted for use, displaying prompt information indicating that the call connection is a secure call connection; or
if the permission item confirmed by the second electronic device is empty, or the permission item confirmed by the second electronic device comprises some of permission items in the permission items restricted for use, displaying prompt information indicating that the call connection is a non-secure call connection.

16. The first electronic device according to any one of claims 11 to 14, wherein when the instructions are executed by the first electronic device, the first electronic device is enabled to perform the step of sending the first request to the second electronic device, wherein the first request comprises the permission item restricted for use, and the step of sending the first request to the second electronic device comprises:
sending a data packet that carries the first request to the second electronic device, wherein the data packet comprises an identifier of the permission item restricted for use.

17. The first electronic device according to claim 16, wherein the data packet comprises one or a combination of the following fields: a data packet header field, a type field, a subtype field, and an information embedding field, wherein
when a value of the type field is a first preset value, and a value of the subtype field is a second preset value, the data packet is a data packet that carries the first request, and data carried in the information embedding field is the first request.

18. The first electronic device according to claim 17, wherein when the instructions are executed by the first electronic device, the first electronic device is enabled to perform the step of sending the data packet that carries the first request to the second electronic device, and the step of sending the data packet that carries the first request to the second electronic device comprises:
adding a random number to the data carried in the information embedding field, and encrypting, by using a key in a trusted execution environment, data obtained after the random number is added;
encapsulating the encrypted data in the data packet; and
sending the data packet to the second electronic device.

19. The first electronic device according to any one of claims 11 to 14, wherein when the instructions are executed by the first electronic device, the first electronic device is enabled to perform the step of obtaining the permission item restricted for use during communication between the first electronic device and the second electronic device, and the step of obtaining the permission item restricted for use during communication between the first electronic device and the second electronic device comprises:
obtaining, based on a security protection level set by the user, a permission item restricted for use that corresponds to the security protection level; or
obtaining a permission item restricted for use that is set by the user.

20. A computer-readable storage medium, wherein the computer-readable storage medium stores a computer program, and when the computer program is run on a computer, the computer is enabled to perform the method according to any one of claims 1 to 9.
